# FASCICULE DE BREVET EUROPEEN

(11) **EP 3 433 056 B1**
(45) Date de publication et mention de la délivrance du brevet: **23.10.2019**
(21) Numéro de dépôt: 17716985.1
(22) Date de dépôt: 24.03.2017
(51) Int. Cl.: B25B 31/00, B25B 27/02

(54) **OUTIL D'EXTRACTION DE CALES DANS UNE TURBOMACHINE**
WERKZEUG ZUM HERAUSZIEHEN VON AUSGLEICHSSCHEIBEN AUS EINER TURBOMASCHINE
TOOL FOR EXTRACTING SHIMS FROM A TURBOMACHINE

(30) Priorité: 24.03.2016 FR 1652571
(43) Date de publication de la demande: 30.01.2019
(73) Titulaire: Safran Aircraft Engines México S.A. De C.V., Colon, Querétaro 76278 (MX)
(72) Inventeur: CASTILLO, Jorge, 42330 Zimapan, Hidalgo (MX); DE ARAUJO, Mickael, 76230 Santiago de Queretaro (MX); MARCELET, Yohannes, 76230 Queretaro (MX)
(74) Mandataire: Cabinet Camus Lebkiri
(86) Numéro de dépôt international: PCT/IB2017/000296
(87) Numéro de publication internationale: WO 2017/163122

(56) Documents cités:
- EP-A1- 0 340 638
- WO-A2-01/15869
- DE-A1- 10 344 098
- FR-A1- 2 945 074
- US-A1- 2002 166 415
- US-B1- 8 127 417

## Description

### DOMAINE TECHNIQUE

La présente invention se rapporte de manière générale au domaine des turbomachines, telles que les turboréacteurs à double flux. L'invention concerne plus particulièrement un outil d'extraction de cales dans une turbomachine, telles que les cales agencées entre une aube de soufflante et le disque de support correspondant.

### ÉTAT DE LA TECHNIQUE

Un outil d'extraction d'une cale située dans une turbomachine est connu de WO 01/15869 A2.

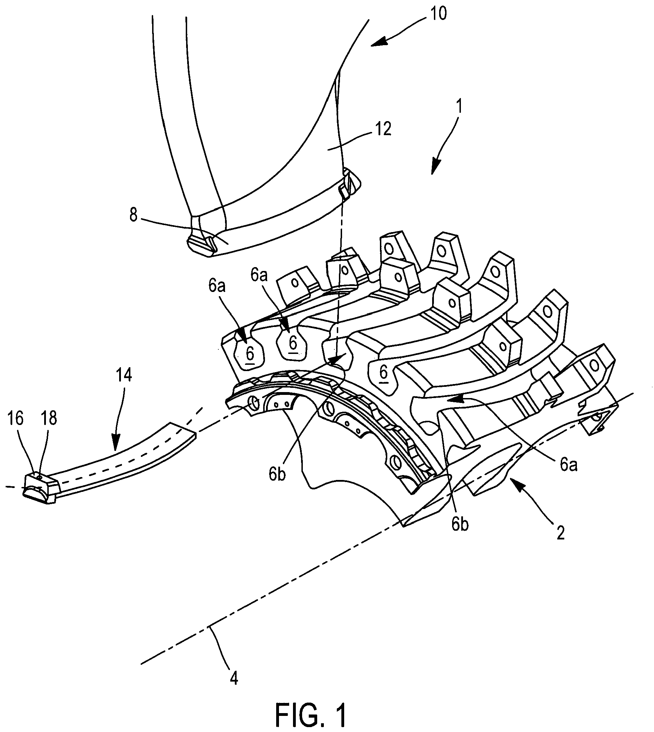

La figure 1 représente de façon éclatée une soufflante 1 de turboréacteur à double flux, telle que décrite dans le brevet FR2945074. La soufflante 1 comprend un disque de support 2 capable d'être mis en rotation par rapport à une partie stator de soufflante (non représentée), autour d'un axe longitudinal 4 de la soufflante. Le disque de support 2 présente à sa périphérie une pluralité d'alvéoles 6 espacées circonférentiellement les unes des autres. Les alvéoles 6, en forme de rainures, s'étendent sensiblement parallèlement à l'axe longitudinal 4 et sont à équidistance par rapport à l'axe longitudinal 4.

Chaque alvéole 6 est destinée à recevoir le pied 8 d'une aube de soufflante 10. Le pied 8 est glissé longitudinalement dans l'alvéole 6, depuis l'une des deux faces latérales du disque 2. L'alvéole 6 présente une extrémité radiale extérieure 6a permettant le passage d'une échasse 12 de l'aube 10, de section rétrécie par rapport à celle du pied 8.

En outre, pour chaque alvéole 6 et aube 10 correspondante, la soufflante 1 comprend une cale 14 interposée entre l'extrémité inférieure du pied 8 et un fond 6b de l'alvéole 6. Cette cale 14 permet de bloquer l'aube 10 dans la direction radiale, en plaquant son pied 8 contre des parois intérieures de l'alvéole 6. La cale 14 comprend en outre à l'une de ses extrémités une butée 16 de rétention axiale de l'aube 10. Cette butée 16 est destinée à venir en appui contre la paroi latérale du disque 2.

Pour retirer une aube de soufflante 10 du turboréacteur, par exemple parce qu'elle est à réparer ou à remplacer, il est nécessaire dans un premier temps d'extraire la cale 14 associée. Compte tenu du faible espace disponible autour de la butée 16, il n'est pas possible d'utiliser des outils d'extraction, tels que des pinces, qui viendraient serrer la butée 16 par l'extérieur. En outre, les efforts requis pour extraire la cale 14 de l'alvéole 6 correspondante sont trop importants pour pouvoir utiliser de tels outils sans endommager la cale.

Un trou d'extraction 18 a donc été aménagé dans la butée 16 de la cale 14. La cale est retirée en insérant par exemple une clé Allen dans le trou 18, puis en tirant sur la clé Allen.

Cependant, ce type d'outil n'est pas suffisamment adapté au démontage de cales car il ne permet pas de saisir correctement la cale 14, si bien qu'après avoir été retirée de son logement, la cale 14 peut tomber et se casser ou endommager d'autres composants du turboréacteur.

### RÉSUMÉ DE L'INVENTION

L'invention a pour but de faciliter l'extraction d'une cale de turbomachine tout en assurant une bonne prise de la cale, de façon à limiter les risques d'endommagement de la cale ou des autres composants de la turbomachine.

Selon un premier aspect de l'invention, ce but est atteint en prévoyant un outil d'extraction comprenant :
- un pion extracteur configuré pour être introduit dans un trou traversant de la cale ;
- un premier organe de préhension comprenant une première extrémité distale destinée à être positionnée en regard du trou traversant d'un premier côté de la cale et aménagée pour maintenir une première extrémité du pion extracteur ; et
- un deuxième organe de préhension comprenant une deuxième extrémité distale destinée à être positionnée en regard du trou traversant d'un deuxième côté opposé de la cale et aménagée pour maintenir une deuxième extrémité opposée du pion extracteur, après avoir introduit le pion extracteur dans le trou traversant de la cale.

L'extrémité distale du premier organe de préhension et l'extrémité distale du deuxième organe de préhension permettent de rendre la cale indissociable de l'outil d'extraction. La cale, située autour du pion extracteur, est en effet bloquée d'une part par le premier organe de préhension et d'autre part par le deuxième organe de préhension. Le risque de chute de la cale avec l'outil d'extraction selon l'invention est donc considérablement diminué par rapport à l'outil d'extraction de l'art antérieur, qui ne saisit la cale que d'un seul côté.

En outre, comme le pion extracteur traverse entièrement la cale et que ses extrémités sont solidement maintenues par les premier et deuxième organes de préhension, la force de traction exercée sur l'outil se répartit sur toute la hauteur de la cale. La procédure d'extraction en est grandement facilitée. Cela réduit également le risque d'endommager la cale (évite le matage des bords du trou traversant) et de casser le pion extracteur.

Dans un premier mode de réalisation de l'outil d'extraction, les premier et deuxième organes de préhension sont solidaires l'un de l'autre de manière à former une seule pièce en forme de U.

Dans un deuxième mode de réalisation de l'outil d'extraction, les premier et deuxième organes de préhension sont des organes distincts destinés à être assemblés solidairement après les avoir positionnés respectivement de part et d'autre de la cale en regard du trou traversant.

L'outil d'extraction selon l'invention peut également présenter une ou plusieurs des caractéristiques ci-dessous, considérées individuellement ou selon toutes les combinaisons techniquement possibles.
De préférence, le pion extracteur est solidaire de la première extrémité distale du premier organe de préhension.

Avantageusement, le premier organe de préhension comprend en outre un pion d'effort et le deuxième organe de préhension comprend en outre un trou configuré pour recevoir le pion d'effort du premier organe de préhension lors de l'assemblage des premier et deuxième organes de préhension. Ce pion d'effort consolide l'assemblage des premier et deuxième organes de préhension et permet de mieux répartir les efforts entre les premier et deuxième organes de préhension.

De préférence, le deuxième organe de préhension comprend en outre un logement configuré pour recevoir le premier organe de préhension et guider le déplacement relatif entre les premier et deuxième organes de préhension lors de l'assemblage des premier et deuxième organes de préhension.

L'outil d'extraction comprend avantageusement une vis de sécurité permettant de verrouiller l'assemblage des premier et deuxième organes de préhension. La vis de sécurité peut être montée sur le premier organe de préhension, le deuxième organe de préhension comprenant alors un trou taraudé configuré pour recevoir la vis de sécurité.

De préférence, l'outil d'extraction comprend en outre un dispositif de traction couplé à une extrémité proximale du deuxième organe de préhension. Ce dispositif de traction comprend par exemple :
- une tige ayant une première extrémité couplée à l'extrémité proximale du deuxième organe de préhension ;
- une butée située à une deuxième extrémité opposée de la tige ; et
- une masse inertielle montée en translation sur la tige.

Un deuxième aspect de l'invention concerne un procédé d'extraction d'une cale située dans une turbomachine et munie d'un trou traversant. Ce procédé comprend les étapes suivantes :
- prévoir un pion extracteur, un premier organe de préhension comprenant une première extrémité distale aménagée pour maintenir une première extrémité du pion extracteur, et un deuxième organe de préhension comprenant une deuxième extrémité distale aménagée pour bloquer une deuxième extrémité opposée du pion extracteur ;
- positionner la première extrémité distale du premier organe de préhension en regard du trou traversant d'un premier côté de la cale ;
- positionner la deuxième extrémité distale du deuxième organe de préhension en regard du trou traversant d'un deuxième côté opposé de la cale ;
- introduire le pion extracteur dans le trou traversant de la cale et bloquer les première et deuxième extrémités du pion extracteur respectivement dans les première et deuxième extrémités distales ;
- exercer une force de traction sur les premier et deuxième organes de préhension pour extraire la cale.

### BRÈVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
- la figure 1, précédemment décrite, est une vue éclatée en perspective d'une partie de soufflante de turboréacteur pour aéronef, de conception connue de l'art antérieur ;
- la figure 2 représente des premier et deuxième organes de préhension d'un outil d'extraction, selon un mode de réalisation préférentiel de l'invention ;
- la figure 3 est une vue en perspective de l'outil d'extraction de la figure 2, lorsqu'il est monté sur une cale de turboréacteur ;
- la figure 4 est une vue en coupe de l'outil d'extraction de la figure 2, lorsqu'il est monté et assemblé sur la cale de turboréacteur ;
- la figure 5 représente un mode de réalisation de dispositif de traction pour exercer une force de traction sur l'outil d'extraction ; et
- la figure 6 est une vue de la tête du deuxième organe de préhension selon le plan de coupe A-A de la figure 2.

Pour plus de clarté, les éléments identiques ou similaires sont repérés par des signes de référence identiques sur l'ensemble des figures.

### DESCRIPTION DÉTAILLÉE D'AU MOINS UN MODE DE RÉALISATION

Dans la description qui suit, les termes « inférieur » et « supérieur » s'entendent par rapport à l'orientation des dessins.

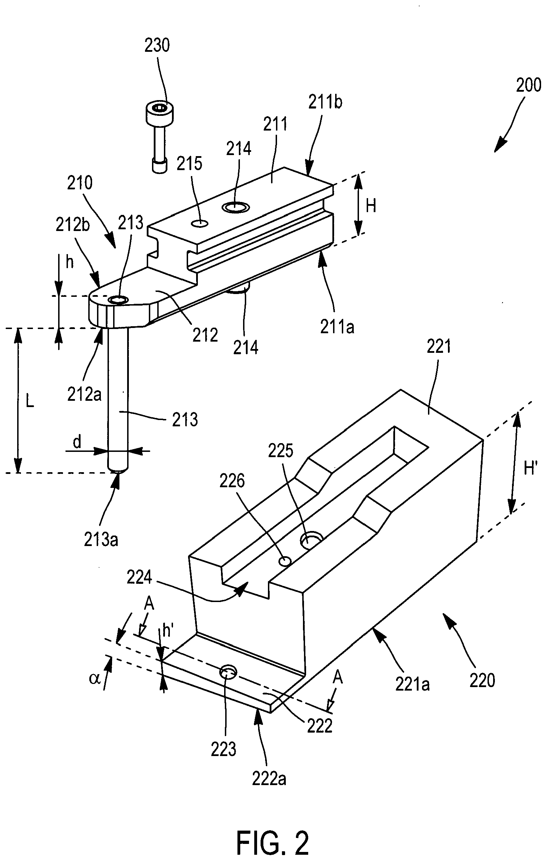

La figure 2 représente un mode de réalisation préférentiel d'un outil 200 permettant d'extraire une cale située dans une turbomachine, par exemple entre une aube de turbomachine et son disque de support. Cet outil d'extraction 200 est notamment destiné au démontage des cales, qui précède le démontage des aubes, dans tout type de turbomachine, terrestre ou aéronautique (turboréacteur, turbopropulseur, turbine à gaz terrestre, etc.). À titre d'exemple, l'outil d'extraction 200 peut servir à retirer la cale associée à une aube de soufflante dans un turboréacteur à double flux, tel que celui représenté sur la figure 1.

L'outil d'extraction 200 comprend un premier organe de préhension 210 et un deuxième organe de préhension 220 complémentaire. Bien qu'ils soient représentés séparément sur la figure 2, les organes de préhension 210 et 220 sont destinés à être assemblés pour saisir fermement la butée de la cale. Les organes de préhension 210-220 sont de préférence constitués d'un métal, par exemple de l'acier.

Le premier organe de préhension 210 comprend un corps 211 de forme allongée et, de préférence, une tête 212 dans le prolongement du corps 211. La tête 212 du premier organe de préhension 210 est configurée pour pouvoir être positionnée d'un côté de la cale, et plus particulièrement en regard d'un trou traversant aménagé dans la butée de la cale. L'espace disponible autour de la butée de la cale étant limité, la tête 212 possède des dimensions restreintes comparées à celles du corps 211, plus volumineux. La tête 212 présente notamment une épaisseur h inférieure à l'épaisseur H du corps 211. À titre d'exemple, l'épaisseur h de la tête 212 vaut environ 3,5 mm tandis que l'épaisseur H du corps 211 est égale à 10 mm environ.

La tête 212 du premier organe de préhension 210 se situe avantageusement au même niveau que la base du corps 211. Autrement dit, la face inférieure 212a de la tête 212 et la face inférieure 211a du corps 211 sont coplanaires. La face supérieure 212b de la tête 212 se trouve par conséquent en retrait par rapport à la face supérieure 211b du corps 211.

Le premier organe de préhension 210 comprend en outre un pion extracteur 213 ancré dans la tête 212. Le pion extracteur 213 s'étend à travers la tête 212, depuis la face supérieure 212b jusqu'à la face inférieure 212a, puis fait saillie en dehors de la tête depuis sa face inférieure 212a. Le pion extracteur 213 est de préférence orienté perpendiculairement aux faces 212a-212b, qui sont planes et parallèles. Le pion extracteur 213 présente des dimensions lui permettant d'occuper entièrement le trou traversant dans la butée de la cale. Son diamètre d est légèrement inférieur au diamètre du trou traversant de la butée et sa longueur L est supérieure à la hauteur de la butée, de sorte que l'extrémité libre 213a du pion extracteur puisse dépasser de la butée lorsqu'il est introduit dans celle-ci.

Dans ce mode de réalisation préférentiel de l'outil d'extraction, le premier organe de préhension 210 comprend également un pion d'effort 214 ancré dans le corps 211 et de préférence, situé approximativement au centre du corps 211. Le pion d'effort 214 s'étend à travers le corps 211 et forme saillie en dehors du corps, du même côté que le pion extracteur 213. Comme le pion extracteur 213, le pion d'effort 214 est de préférence orienté perpendiculairement aux faces inférieure 211a et supérieure 211b du corps 211, également planes et parallèles. Le pion d'effort 214 présente avantageusement une longueur inférieure à celle du pion extracteur 213 et un diamètre supérieur à celui du même pion extracteur.

Le pion extracteur 213 et le pion d'effort 214 sont de préférence des tiges cylindriques dont les extrémités respectives reliées au premier organe de préhension 210 sont montées à force, respectivement dans la tête 212 et dans le corps 211.

Enfin, le premier organe de préhension 210 peut comprendre un trou de passage 215, destiné à recevoir une vis de sécurité 230 de l'outil d'extraction 200. La vis de sécurité 230 est de préférence une vis imperdable. En d'autres termes, après avoir été montée sur le premier organe de préhension 210, elle ne peut plus quitter le trou de passage 215.

Le deuxième organe de préhension 220, appelé « bloc », comprend également un corps 221 de forme allongée et une tête 222 dans le prolongement du corps 221. Le corps 221 a globalement la forme d'un parallélépipède rectangle, tandis que la tête 222 forme une extrémité en saillie du deuxième organe de préhension 220.

La tête 222 du deuxième organe de préhension 220 est configurée pour pouvoir être positionnée en regard du trou traversant de la butée, du côté opposé à la tête 212 du premier organe de préhension 210. Ses dimensions sont donc réduites, à l'instar de la tête 212 du premier organe de préhension 210. En particulier, la tête 222 est bien plus fine que le corps 221 du deuxième organe de préhension 220. Son épaisseur vaut par exemple 4 mm environ alors que l'épaisseur H' du corps 221 est égale à 31 mm environ. La tête 222 se situe avantageusement au même niveau que la base du corps 221. Autrement dit, la face inférieure 221a du corps 221 et la face inférieure 222a de la tête 222 et sont situées dans le même plan.

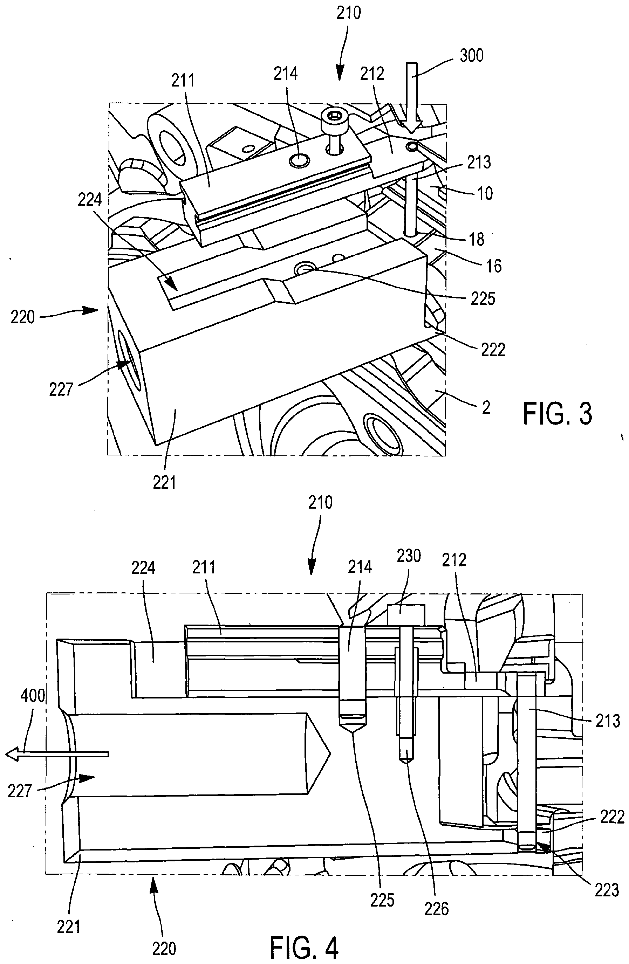

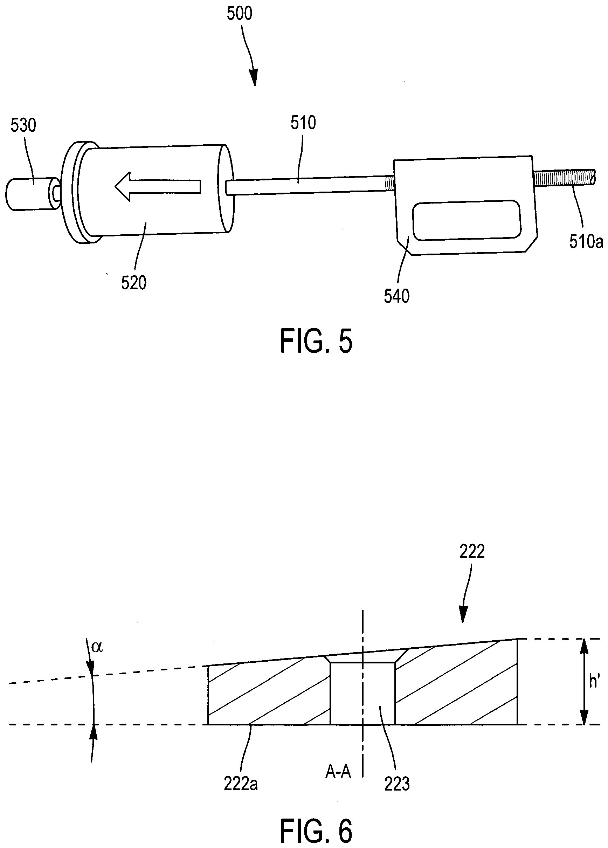

Comme cela est illustré en détail sur les figures 2 et 6, l'épaisseur de la tête 222 est de préférence variable et diminue à partir d'une épaisseur maximale h' de 4 mm selon un angle α d'environ 3° entre les faces inférieure et supérieure de la tête 222. L'angle α permet de positionner le bloc 220 sous de la cale 14 dans l'espace réduit agencé entre la cale et le disque 2, en effectuant un contact entre la tête 222 et la cale 14 (cf. Fig.3).

La tête 222 du deuxième organe de préhension 220 est, en outre, aménagée pour recevoir et maintenir l'extrémité libre 213a du pion extracteur 213 appartenant au premier organe de préhension 210. Elle comprend par exemple un premier trou 223, appelé trou récepteur, qui peut être borgne ou débouchant (i.e. traversant). De préférence, le trou récepteur 223 est débouchant, ce qui permet d'augmenter la surface de contact entre la paroi du trou 223 et le pion extracteur 213 afin d'avoir un effort mieux reparti et ainsi diminuer les contraintes mécaniques sur la pièce, en particulier les contraintes de cisaillement. Avantageusement, le diamètre du trou récepteur 223 est tout juste supérieur au diamètre d du pion extracteur 213. Ainsi, l'extrémité libre 213a du pion extracteur 213 peut être bloquée à sa périphérie par la tête 222 du deuxième organe de préhension 220.

Dans le mode de réalisation préférentiel de la figure 2, le corps 221 du deuxième organe de préhension 220 comprend également un logement 224 dans lequel le corps 211 du premier organe de préhension 210 peut être disposé. Le logement 224 présente une forme et des dimensions permettant de guider le corps 211 du premier organe de préhension 210 lors de l'assemblage des organes de préhension 210 et 220.

La cale 14, comme l'alvéole 6 prévue dans le disque de support 2 pour l'accueillir, peuvent être courbées (cf. Fig.1). Dans ce cas, le premier organe de préhension 210 et le deuxième organe de préhension 220 sont de préférence configurés de manière à ce que l'effort de traction appliqué sur la cale 14 soit dirigé selon la tangente à la courbure de la cale. Cela permet une extraction plus performante de la cale. À cet effet, le pion extracteur 213 du premier organe de préhension 210 est avantageusement incliné à 90° par rapport à la face inférieure 212a de la tête 212 et le fond du logement 224 est avantageusement incliné par rapport à la face inférieure 221a du bloc 220.

Un deuxième trou 225 et un troisième trou 226 sont en outre prévus dans le corps 221 du deuxième organe de préhension 220, pour recevoir respectivement le pion d'effort 214 et la vis de sécurité 230 du premier organe de préhension 210. Le pion d'effort 214 et la vis de sécurité 230 étant situés dans le corps 211 du premier organe de préhension 210, les deuxième et troisième trous 225-226 sont pourvus d'une profondeur appropriée et débouchent dans le logement 224.

Les portions en saillie du pion extracteur 213 et du pion d'effort 214 n'ayant pas de filet, le trou récepteur 223 du pion extracteur 213 et le deuxième trou 225 associé au pion d'effort 214 ne sont pas taraudés, à la différence du troisième trou 226 recevant la vis de sécurité 230.

Les figures 3 et 4 sont des vues de l'outil d'extraction 200, respectivement en perspective et en coupe transversale, qui illustrent des étapes de la procédure d'extraction d'une cale. La cale est ici située entre une aube de soufflante 10 et son disque de support 2, dans un turboréacteur à double flux. Comme décrit en relation avec la figure 1, cette cale comprend une butée 16 traversée par un trou 18.

Dans un premier temps, les têtes 212 et 222 situées respectivement aux extrémités distales des premier et deuxième organes de préhension 210 et 220 sont positionnées de part et d'autre de la butée 16. De préférence, la tête 212 du premier organe de préhension 210, équipée du pion extracteur 213, est positionnée du côté de la butée 16 orienté radialement vers l'extérieur du disque de support 2, c'est-à-dire du côté de l'aube 10. La tête 222 du deuxième organe de préhension 220 est alors positionnée du côté opposé, orienté vers le centre du disque 2.

Le premier organe de préhension 210 est positionné de façon à amener le pion extracteur 213 à l'aplomb du trou traversant 18 de la cale 14. Puis, le premier organe de préhension 210 est déplacé en direction du deuxième organe de préhension 220, qui peut être immobile. Cela a pour effet de faire glisser le pion extracteur 213 à l'intérieur du trou traversant 18, comme indiqué par la flèche 300.

À la fin du déplacement du premier organe de préhension 210, le corps 211 de celui-ci peut être guidé par les parois latérales du logement 224, jusqu'à ce que la face inférieure 211a du corps 211 entre en contact avec le fond du logement 224. Ce guidage peut requérir au préalable un ajustement de la position du deuxième organe de préhension 220 par rapport au premier organe de préhension 210, de façon à centrer le corps 211 par rapport au logement 224. Le logement 224 permet en outre d'amener plus facilement le pion d'effort 214 à l'aplomb du deuxième trou 225, car il suffit alors de faire glisser le corps 211 dans le logement 224. Le logement 224 facilite donc grandement le positionnement relatif des premier et deuxième organes de préhension 210-220 et leur assemblage.

Le déplacement du corps 211 dans le logement 224 de façon à positionner le pion d'effort 214 dans le deuxième trou 225 permet d'aligner automatiquement le trou récepteur 223 du deuxième organe de préhension 210 avec le trou traversant 18 et le pion extracteur 213 situé à l'intérieur. L'agencement du pion extracteur 213 et du pion d'effort 214 est tel que l'extrémité libre du pion extracteur 213 traverse le trou 18 de la cale 14, à la suite de quoi le pion d'effort 214 se met en position dans le deuxième trou 225, avant que le pion extracteur 213 se positionne dans le trou récepteur 223.

Pour réaliser l'assemblage des organes de préhension 210 et 220, il est également possible d'enfoncer d'abord le pion extracteur 213 dans le trou traversant 18 de la butée 16 (selon la position circonférentielle de l'aube, le premier organe de préhension 210 tient sur la cale sans assistance), puis d'amener la tête 222 du deuxième organe de préhension en regard du trou traversant 18. Le guidage entre les deux pièces peut être également utilisé dans ce cas.

Sur la vue en coupe de la figure 4, on a représenté la configuration des organes de préhension 210 et 220 une fois assemblés. Le corps 211 du premier organe de préhension 210 occupe en grande partie le logement 224 du deuxième organe de préhension 220. L'extrémité en saillie du pion d'effort 214 occupe le deuxième trou 225. Le pion extracteur 213, entouré de la butée 16, est solidaire de la tête 212 du premier organe de préhension 210 à l'une de ses extrémités et maintenu par la tête 222 du deuxième organe de préhension 220 à l'autre de ses extrémités.

Les premier et deuxième organes de préhension 210 et 220 peuvent être positionnés et assemblés manuellement par un opérateur. Le premier organe de préhension 210 est tenu par le corps 211 dans une main, tandis que le deuxième organe de préhension 220 est tenu par le corps 220 dans l'autre main. Grâce au fait que le poids et l'encombrement des organes de préhension 210 et 220 sont faibles, cette manipulation est aisée, même dans un espace aussi réduit que celui d'un turboréacteur.

Après avoir assemblé les organes de préhension 210 et 220, la vis de sécurité 230 est avantageusement vissée dans le troisième trou 226 du deuxième organe de préhension 220. Cela permet de verrouiller l'assemblage des premier et deuxième organes de préhension 210-220. Les organes de préhension sont ainsi indissociables, entre eux et avec la cale, toujours en position entre l'aube de soufflante 10 et le disque de support 2. Par conséquent, ils ne peuvent pas tomber dans le turboréacteur.

En outre, grâce au logement 224 aménagé dans le deuxième organe de préhension 220, l'outil d'extraction est particulièrement compact en configuration assemblée. Le risque que l'outil bute contre des éléments voisins du turboréacteur lors de l'extraction de la cale est par conséquent diminué.

Enfin, l'extraction de la cale s'effectue en exerçant une force de traction 400 (cf. FIG.4) sur l'un quelconque des organes de préhension 210-220. Comme la butée de la cale est devenue indissociable de l'assemblage des organes de préhension 210-220, elle ne peut pas tomber d'elle-même dans le turboréacteur, ce qui limite les risques d'endommagement dans le turboréacteur.

La force de traction 400 est avantageusement exercée depuis l'extrémité proximale du deuxième organe de préhension 220. Comme cela est visible sur les figures 3 et 4, l'extrémité proximale du deuxième organe 220 peut être aménagée pour y coupler un dispositif de traction. Le corps 221 peut notamment comprendre un trou taraudé 227. Le trou taraudé 227, borgne, s'étend dans le corps 221 depuis l'extrémité proximale du deuxième organe de préhension 220.

Grâce au pion d'effort 214 et au deuxième trou 225 correspondant, l'assemblage des premier et deuxième organes de préhension 210-220 ne repose pas uniquement sur le couplage entre le pion extracteur 213 et la tête 220. Ainsi, lorsqu'on exerce la force de traction 400, les efforts entre les deux organes de préhension sont mieux répartis, ce qui diminue les risques de détérioration de la tête 220 du deuxième organe de préhension 220 ainsi que du pion extracteur 213.

La figure 5 représente un mode de réalisation 500 du dispositif de traction permettant d'exercer la force de traction 400 sur le deuxième organe de préhension 220. Le dispositif de traction 500 comprend une tige 510, de préférence cylindrique, et une masse inertielle 520 montée mobile sur la tige 510. L'extrémité distale 510a de la tige 510 est configurée pour être couplée à l'extrémité proximale du deuxième organe de préhension 220. L'extrémité distale 510a de la tige 510 présente, par exemple, un filetage, pour que la tige puisse être vissée dans le trou taraudé 227 du deuxième organe de préhension 220. À l'extrémité proximale de la tige 500, le dispositif de traction 500 comprend en outre une butée 530 de rétention de la masse inertielle 520. La butée 530 peut être fixée à l'extrémité proximale de la tige 500, par exemple au moyen d'une goupille, ou être formée en une seule pièce avec la tige 510.

Pour extraire la cale 14 à l'aide de ce dispositif 500, la masse inertielle 520 est animée d'un mouvement de translation le long de la tige, en direction de la butée 530. La force de traction est générée lorsque la masse inertielle 520 heurte la butée 530.

Le dispositif de traction 500 peut être entièrement constitué de métal, par exemple de l'acier. Il est avantageusement équipé d'une poignée 540 pour faciliter son utilisation et, au préalable, son installation sur le deuxième organe de préhension 220. La poignée 540 est fixée sur la tige 510, de préférence entre l'extrémité 510a et la masse inertielle 520. De manière générale, la poignée 540 permet de transporter le dispositif 500 et également, de le maintenir lors de l'impact de la masse inertielle 520 contre la butée 530.

Ainsi, le dispositif de traction 500 permet de générer sans difficultés la force nécessaire à l'extraction de la cale, simplement en lançant la masse inertielle 520 contre la butée 530. Il forme donc avec les organes de préhension 210-200 un outil d'extraction de cales particulièrement simple à utiliser.

Naturellement, l'invention n'est pas limitée au mode de réalisation préférentiel qui vient d'être décrit en référence aux figures 2 à 5 et de nombreuses variantes de l'outil d'extraction apparaîtront à l'homme du métier. En particulier, le pion extracteur et le pion d'effort peuvent être répartis différemment. On peut notamment répartir les deux pions entre les deux organes de préhension, par exemple en équipant du pion d'effort 214 le deuxième organe de préhension 220 (plutôt que le premier organe de préhension 210). Le pion d'effort 214 serait alors situé à l'intérieur du logement 224 et la face inférieure du premier organe de préhension 210 présenterait le deuxième trou 225. Il est également envisageable d'inverser les rôles des premier et deuxième organes de préhension, par exemple en intervertissant les têtes 212 et 222.

Enfin, dans un mode de réalisation simplifié, l'outil d'extraction peut comprendre un seul organe de préhension en forme de « U » (plutôt que deux organes en forme de « L »), dont les branches libres sont solidaires et destinées à recevoir les extrémités opposées d'un pion extracteur dans des trous récepteurs agencés de manière appropriée. Autrement dit, les premier et deuxième organes de préhension 210-220 ne forment qu'une seule pièce qui vient saisir le pion extracteur de part et d'autre de la cale. Le pion extracteur est donc, dans ce mode de réalisation simplifié, séparé de l'organe de préhension. Les deux branches de l'organe en forme de U sont positionnées de part et d'autre de la butée de la cale. Ainsi, la cale occupe l'espace entre les deux branches. Puis les trous récepteurs aménagés aux extrémités distales des branches sont alignés sensiblement avec le trou traversant de la cale, avant que le pion extracteur ne soit introduit dans la butée de la cale et bloqué dans chaque branche du U.

## Revendications

1. Outil d'extraction (200) d'une cale (14) située dans une turbomachine (1) et munie d'un trou traversant (18), **caractérisé en ce qu'**il comporte
- un pion extracteur (213) configuré pour être introduit dans le trou traversant (18) de la cale (14) ;
- un premier organe de préhension (210) comprenant une première extrémité distale (212) destinée à être positionnée en regard du trou traversant d'un premier côté de la cale et aménagée pour maintenir une première extrémité du pion extracteur (213) ; et
- un deuxième organe de préhension (220) comprenant une deuxième extrémité distale (222) destinée à être positionnée en regard du trou traversant d'un deuxième côté opposé de la cale et aménagée pour maintenir une deuxième extrémité opposée (213a) du pion extracteur (213), après avoir introduit le pion extracteur (213) dans le trou traversant (18) de la cale (14).

2. Outil d'extraction selon la revendication 1, dans lequel les premier et deuxième organes de préhension sont solidaires l'un de l'autre de manière à former une seule pièce en forme de U.

3. Outil d'extraction (200) selon la revendication 1, dans lequel les premier (210) et deuxième (220) organes de préhension sont des organes distincts destinés à être assemblés solidairement après les avoir positionnés respectivement de part et d'autre de la cale en regard du trou traversant.

4. Outil d'extraction (200) selon la revendication 3, dans lequel le pion extracteur (213) est solidaire de la première extrémité distale (212) du premier organe de préhension (210).

5. Outil d'extraction (200) selon l'une des revendications 3 et 4, dans lequel le premier organe de préhension (210) comprend en outre un pion d'effort (214) et dans lequel le deuxième organe de préhension (220) comprend en outre un trou (225) configuré pour recevoir le pion d'effort du premier organe de préhension lors de l'assemblage des premier et deuxième organes de préhension (210-220).

6. Outil d'extraction selon l'une quelconque des revendications 3 à 5, dans lequel le deuxième organe de préhension (220) comprend en outre un logement (224) configuré pour recevoir le premier organe de préhension (210) et guider le déplacement relatif entre les premier et deuxième organes de préhension (210-220) lors de l'assemblage des premier et deuxième organes de préhension.

7. Outil d'extraction (200) selon l'une quelconque des revendications 3 à 6, comprenant en outre une vis de sécurité (230) permettant de verrouiller l'assemblage des premier et deuxième organes de préhension (210-220).

8. Outil d'extraction (200) selon la revendication 7, dans lequel la vis de sécurité (230) est montée sur le premier organe de préhension (210), le deuxième organe de préhension (220) comprenant un trou taraudé (226) configuré pour recevoir la vis de sécurité.

9. Outil d'extraction selon l'une quelconque des revendications 1 à 8, comprenant en outre un dispositif de traction (500) couplé à une extrémité proximale du deuxième organe de préhension (220).

10. Outil d'extraction (200) selon la revendication 9, dans lequel le dispositif de traction (500) comprend :
- une tige (510) ayant une première extrémité (510a) couplée à l'extrémité proximale du deuxième organe de préhension (220) ;
- une butée (530) située à une deuxième extrémité opposée de la tige ; et
- une masse inertielle (520) montée en translation sur la tige (510).

11. Procédé d'extraction d'une cale (14) située dans une turbomachine (1) et munie d'un trou traversant (18), **caractérisé en ce qu'**il comporte les étapes suivantes :
- prévoir un pion extracteur (213), un premier organe de préhension (210) comprenant une première extrémité distale (212) aménagée pour maintenir une première extrémité du pion extracteur (213), et un deuxième organe de préhension (220) comprenant une deuxième extrémité distale (222) aménagée pour bloquer une deuxième extrémité opposée (213a) du pion extracteur (213) ;
- positionner la première extrémité distale (212) du premier organe de préhension (210) en regard du trou traversant d'un premier côté de la cale ;
- positionner la deuxième extrémité distale (222) du deuxième organe de préhension (220) en regard du trou traversant d'un deuxième côté opposé de la cale ;
- introduire le pion extracteur (213) dans le trou traversant (18) de la cale (14) et bloquer les première et deuxième extrémités du pion extracteur respectivement dans les première (212) et deuxième (222) extrémités distales ;
- exercer une force de traction sur les premier et deuxième organes de préhension pour extraire la cale.

## Patentansprüche

1. Extraktionswerkzeug (200) eines Keils (14), der in einer Turbomaschine (1) angeordnet und mit einem durchgehenden Loch (18) versehen ist, **dadurch gekennzeichnet, dass** es umfasst:
- einen Extraktionsstift (213), der gestaltet ist, um in das durchgehende Loch (18) des Keils (14) eingeführt zu sein;
- ein erstes Greiforgan (210), umfassend ein erstes distales Ende (212), das dazu bestimmt ist, gegenüber dem durchgehenden Loch einer ersten Seite des Keils positioniert und angeordnet zu sein, um ein erstes Ende des Extraktionsstiftes (213) zu halten; und
- ein zweites Greiforgan (220), umfassend ein zweites distales Ende (222), das dazu bestimmt ist, gegenüber dem durchgehenden Loch einer zweiten entgegengesetzten Seite des Keils positioniert und angeordnet zu sein, um ein zweites entgegengesetztes Ende (213a) des Extraktionsstiftes (213) zu halten, nachdem der Extraktionsstift (213) in dem durchgehenden Loch (18) des Keils (14) eingeführt ist.

2. Extraktionswerkzeug gemäß Anspruch 1, bei dem das erste und zweite Greiforgan miteinander derart fest verbunden sind, dass ein einziges U-förmiges Stück gebildet ist.

3. Extraktionswerkzeug (200) gemäß Anspruch 1, bei dem das erste (210) und zweite (220) Greiforgan unterschiedliche Organe sind, die dazu bestimmt sind, fest miteinander verbunden zu sein, nachdem sie jeweils auf jeder Seite des Keils gegenüber dem durchgehenden Loch positioniert wurden.

4. Extraktionswerkzeug (200) gemäß Anspruch 3, bei dem der Extraktionsstift (213) mit dem ersten distalen Ende (212) des ersten Greiforgans (210) fest verbunden ist.

5. Extraktionswerkzeug (200) gemäß einem der Ansprüche 3 und 4, bei dem das erste Greiforgan (210) darüber hinaus einen Kraftstift (214) umfasst und bei dem das zweite Greiforgan (220) darüber hinaus ein Loch (225) umfasst, das gestaltet ist, um den Kraftstift des ersten Greiforgans beim Zusammensetzen des ersten und zweiten Greiforgans (210 - 220) aufzunehmen.

6. Extraktionswerkzeug gemäß irgendeinem der Ansprüche 3 bis 5, bei dem das zweite Greiforgan (220) darüber hinaus eine Aufnahme (224) umfasst, die gestaltet ist, um das erste Greiforgan (210) zu empfangen und die relative Verschiebung zwischen dem ersten und zweiten Greiforgan (210 - 220) beim Zusammensetzen des ersten und zweiten Greiforgans zu führen.

7. Extraktionsorgan (200) gemäß irgendeinem der Ansprüche 3 bis 6, umfassend darüber hinaus eine Sicherheitsschraube (230), die das Verriegeln der Zusammensetzung des ersten und zweiten Greiforgans (210 - 220) erlaubt.

8. Extraktionswerkzeug (200) gemäß Anspruch 7, bei dem die Sicherheitsschraube (230) auf dem ersten Greiforgan (210) montiert ist, wobei das zweite Greiforgan (220) ein Gewindeloch (226) umfasst, das gestaltet ist, um die Sicherheitsschraube aufzunehmen.

9. Extraktionswerkzeug gemäß irgendeinem der Ansprüche 1 bis 8, umfassend darüber hinaus eine Zugvorrichtung (500), die mit einem proximalen Ende des zweiten Greiforgans (220) gekoppelt ist.

10. Extraktionswerkzeug (200) gemäß Anspruch 9, bei dem die Zugvorrichtung (500) umfasst:
- einen Stift (510), der ein erstes Ende (510a) aufweist, das an dem proximalen Ende des zweiten Greiforgans (220) gekoppelt ist;
- einen Anschlag (530), der an einem zweiten, dem Stift entgegengesetzten Ende angeordnet ist; und
- eine inerte Masse (520), die in Translation auf dem Stift (510) montiert ist.

11. Extraktionsverfahren eines Keils (14), der in einer Turbomaschine (1) angeordnet und mit einem durchgehenden Loch (18) versehen ist, **dadurch gekennzeichnet, dass** es die folgenden Schritte umfasst:
- Vorsehen eines Extraktionsstiftes (213), wobei ein erstes Greiforgan (210) ein erstes distales Ende (212) umfasst, das eingerichtet ist, um ein erstes Ende des Extraktionsstiftes (213) zu halten, und ein zweites Greiforgan (220), umfassend ein zweites distales Ende (222), das eingerichtet ist, um ein zweites, dem Extraktionsstift (213) entgegengesetztes Ende (213a) zu blockieren;
- Positionieren des ersten distalen Endes (212) des ersten Greiforgans (210) gegenüber dem durchgehenden Loch einer ersten Seite des Keils;
- Positionieren des zweiten distalen Endes (222) des zweiten Greiforgans (220) gegenüber dem durchgehenden Loch einer zweiten Seite, die dem Keil entgegengesetzt ist;
- Einführen des Extraktionsstifts (213) in das durchgehende Loch (18) des Keils (14) und Blockieren des ersten und zweiten Endes des Extraktionsstifts jeweils in das erste (212) und zweite (222) distale Ende;
- Ausüben einer Zugkraft auf das erste und zweite Greiforgan zum Extrahieren des Keils.

## Claims

1. Extraction tool (200) for extracting a shim (14) located in a turbomachine (1) and provided with a through-hole (18), **characterized in that** it comprise
- an extractor pin (213) configured to be introduced in the through-hole (18) of the shim (14);
- a first gripping member (210) comprising a first distal end (212) intended to be positioned facing the through-hole on a first side of the shim and arranged to hold a first end of the extractor pin (213); and
- a second gripping member (220) comprising a second distal end (222) intended to be positioned facing the through-hole on a second opposite side of the shim and arranged to hold a second opposite end (213a) of the extractor pin (213), after the extractor pin (213) has been introduced into the through-hole (18) of the shim (14).

2. Extraction tool according to claim 1, wherein the first and second gripping members are integral with each other so as to form a single U-shaped piece.

3. Extraction tool (200) according to claim 1, wherein the first (210) and second (220) gripping members are distinct members intended to be jointly assembled after they have been respectively positioned on either side of the shim facing the through-hole.

4. Extraction tool (200) according to claim 3, wherein the extractor pin (213) is secured to the first distal end (212) of the first gripping member (210).

5. Extraction tool (200) according to one of claims 3 and 4, wherein the first gripping member (210) further comprises a strain pin (214) and wherein the second gripping member (220) further comprises a hole (225) configured to receive the strain pin of the first gripping member upon assembling the first and second gripping members (210-220).

6. Extraction tool according to any of claims 3 to 5, wherein the second gripping member (220) further comprises a housing (224) configured to receive the first gripping member (210) and guide the relative movement between the first and second gripping members (210-220) upon assembling the first and second gripping members.

7. Extraction tool (200) according to any of claims 3 to 6, further comprising a safety screw (230) enabling the assembly of the first and second gripping members (210-220) to be locked.

8. Extraction tool (200) according to claim 7, wherein the safety screw (230) is mounted on the first gripping member (210), the second gripping member (220) comprising a tap hole (226) configured to receive the safety screw.

9. Extraction tool according to any of claims 1 to 8, further comprising a pulling device (500) coupled to a proximal end of the second gripping member (220).

10. Extraction tool (200) according to claim 9, wherein the pulling device (500) comprises:
- a rod (510) having a first end (510a) coupled to the proximal end of the second gripping member (220);
- an end stop (530) located at a second opposite end of the rod; and
- an inertial mass (520) translationally mounted on the rod (510).

11. Method for extracting a shim (14) located in a turbomachine (1) and provided with a through-hole (18), **characterized in that** it comprises the following steps of:
- providing an extractor pin (213), a first gripping member (210) comprising a first distal end (212) arranged to hold a first end of the extractor pin (213), and a second gripping member (220) comprising a second distal end (222) arranged to block a second opposite end (213a) of the extractor pin (213);
- positioning the first distal end (212) of the first gripping member (210) facing the through-hole on a first side of the shim;
- positioning the second distal end (222) of the second gripping member (220) facing the through-hole on a second opposite side of the shim;
- introducing the extractor pin (213) into the through-hole (18) of the shim (14) and blocking the first and second ends of the extractor pin in the first (212) and second (222) distal ends respectively;
- exerting a pulling force on the first and second gripping members to extract the shim.
